# EUROPÄISCHE PATENTSCHRIFT

(11) **EP 1 221 525 B1**
(45) Veröffentlichungstag und Bekanntmachung des Hinweises auf die Patenterteilung: **19.05.2004**
(21) Anmeldenummer: 01130365.8
(22) Anmeldetag: 20.12.2001
(51) Int. Cl.: E06B 3/30, E06B 3/263

(54) **Holz-Alu-Fenster**
Compound wood-aluminium window
Fenêtre mixte bois-aluminium

(30) Priorität: 03.01.2001 DE 10100101
(43) Veröffentlichungstag der Anmeldung: 10.07.2002
(73) Patentinhaber: Hermann Gutmann Werke AG, 91781 Weissenburg (DE)
(72) Erfinder: Müller, Werner, 91757 Treuchtlingen (DE)
(74) Vertreter: Matschkur, Lindner Blaumeier Patent- und Rechtsanwälte

(56) Entgegenhaltungen:
- DE-A- 10 125 902
- DE-A- 19 630 643
- DE-U- 29 817 693
- DE-U- 29 916 942

## Beschreibung

Die Erfindung bezieht sich auf ein Holz-Alu-Fenster mit einer außen auf einen Holzrahmen aufgebrachten Aluminiumschale.

Neben einer Ausführungsform, bei der die Aluminiumschale auf eine entsprechend mit Hinterschneidungen ausgebildetes spezielles Holzrahmenprofil aufgeklipst ist und vor dem Holzrahmen unter Bildung einer Hinterlüftung in einem Abstand von wenigen Millimetern verläuft, ist die gängige Ausbildung von Holz-Alu-Fenstern - man vergleiche beispielsweise die DE 196 30 643 A1 - der Gestalt, dass die Aluminiumschale mit Längsrippen versehen ist, welche im Wesentlichen C-förmige Aufnahmen für am Holzrahmen befestigte Halter bilden. Diese Halter sind mit einem im Wesentlichen T-förmigen, teilweise federnd ausgebildeten Kopf versehen, der die einspringenden Stege der gemeinsam ein U-Profil bildenden Längsrippen des Aluminiumprofils hintergreift. Dabei ist es auch bereits vorgeschlagen worden, die Aluminiumprofile teilweise mit isolierenden Werkstoffen auszufüllen, um eine bessere Wärmedämmung des Gesamtfensters zu erreichen. Nennenswerte Verbesserungen der Wärmedämmung lassen sich dabei allerdings grundsätzlich schon deshalb nicht erreichen, da ja die Aluminiumschale bei beiden Ausführungsformen direkt am Holz aufsitzt, beziehungsweise unmittelbar vor dem Holzrahmen endet und damit daneben liegende Isolierteile durch hochwärmeleitende Kältebrücken unwirksam gemacht werden.

Aus der DE 298 17 693 U1 ist darüber hinaus ein Formteil zur Verbesserung von Wärmedämmung und konstruktivem Holzschutz vorbekannt, bei dem ein mit Schaumstoff gefülltes Kunststoffprofil verwendet wird. Hierbei handelt es sich allerdings nicht um ein Holz-Alu-Fenster, da anstelle des Aluminiumprofils dort ein Kunststoffprofil verwendet wird.

Der Erfindung liegt daher die Aufgabe zugrunde, ein Holz-Alu-Fenster der eingangs genannten Art so auszugestalten, dass es eine sehr starke Verbesserung der Wärmedämmung des Verbundfensters bewirkt.

Zur Lösung dieser Aufgabe ist erfindungsgemäß vorgesehen, dass die ohne nach rückwärts überstehende Versteifungs- und Befestigungsstege ausgebildete Aluminiumschale mit einem formstabilen Kunststoffschaum, vorzugsweise PU-Schaum ausgeschäumt ist, dessen Innenfläche an der Holzrahmenaußenfläche anliegend befestigt ist, dass in die Kunststoffschaum-Auskleidung Befestigungsschienen zur Aufnahme von vorzugsweise T-förmigen am Holzrahmen befestigten Haltern bündig eingebettet sind, dass die vorzugsweise aus Kunststoff bestehenden Befestigungsschienen ein C-Profil aufweisen und dass an die Befestigungsschienen zumindest teilweise die Innenfläche der Kunststoffschaum-Auskleidung überdeckende Abdeckschenkel angeformt sind.

Durch die erfindungsgemäße Ausbildung treten weder die nach hinten gerichteten Außenschenkel der Aluminiumschale, wie bei der ersten vorstehend beschriebenen Ausführungsform eines Holz-Alu-Fensters nach dem Stand der Technik in Kontakt mit dem Holzfenster und bilden unmittelbar an diesem eine Kältebrücke, noch die bei der zweiten Ausführungsform des Standes der Technik vorgesehenen rückseitig überstehenden Befestigungsrippen, die ja im vorliegenden Fall fehlen, sodass in Verbindung mit dem Ausschäumen der Aluminiumschalen ein Vorsatzbauelement mit hoher Wärmedämmung gegeben ist. Der Aufbau der Aluminiumschale ähnelt dabei dem Aufbau dem Aluminiumverkleidungsschalen bei der ersten Ausführungsform des vorstehend beschriebenen Standes der Technik, allerdings mit dem entscheidenden Unterschied, dass die komplizierte vorstehende Holzprofilierung zum Aufrasten der Schalen nicht erforderlich ist und dass zusätzlich das entsprechende Schaumstoffvolumen eine sehr viel höhere Wärmedämmung bringt, als ein entsprechendes Holzvolumen.

Die vorteilhafte Befestigung mithilfe der Halter nach Art des zweiten Ausführungsbeispiels solcher Holz-Alu-Fenster nach dem Stand der Technik, erreicht die Erfindung durch die in die Kunststoffschaum-Auskleidung eingebetteten aus Kunststoff bestehenden Befestigungsschienen, wobei diese zusätzlich durch ihre angeformten Abdeckschenkel die Innenfläche der Kunststoffschaum-Auskleidung weitgehend abdecken und somit vor einer Verschmutzung oder Beschädigung schützen können. Mit besonderem Vorteil kann dabei in Weiterbildung der Erfindung vorgesehen sein, dass in der Kunststoffschaum-Auskleidung eine Wassersammelkammer ausgebildet ist, von der die Kunststoffschaum-Auskleidung durchsetzende Ablaufbohrungen ausgehen. Diese Ausbildung, bei der also die Wassersammelkammer nicht in das Holzprofil eingefräst zu werden braucht, hat den Vorteil, dass auch bereits bestehende Fenster ohne eine solche schon vorgesehene Wassersammelkammer mithilfe der erfindungsgemäßen ausgeschäumten Aluminiumschalen nachträglich verkleidet werden können.

In weiterer Ausgestaltung der Erfindung kann dabei vorgesehen sein, dass die Abdeckschenkel sich ― unter Auskleidung der Wassersammelkammer ― bis zum Dichtungsaufnahmebereich erstreckten.

Eine ganz besonders vorteilhafte Ausführungsform ergibt sich in Ausgestaltung der Erfindung dadurch, dass in die ohne rückwärts überstehende Versteifungs- und Befestigungsstege ausgebildete Aluminiumschale ein separat gefertigtes Bauteil aus einer Kunststoffschaum- Auskleidung, insbesondere aus PU-Schaum, die vollständig von einem dünnen Kunststoffprofil umhüllt ist, verrastend eingesetzt ist, dessen Innenfläche an der Holzrahmenaußenfläche anliegend befestigt ist, wobei das dünne Kunststoffprofil C-förmige, in das Bauteil eingebettete Befestigungsschienen zur Aufnahme von T-förmigen, am Holzrahmen befestigten Haltern bildet. Bei dieser Ausführungsform ist die Kunststoffschaum-Auskleidung nicht direkt in das Aluminiumprofil durch Ausschäumen eingebracht, was unter anderem den Vorteil einer einfacheren Recyclebarkeit mit sich bringt, da die Aluminiumschale und die Kunststoffschaum-Auskleidung sehr einfach voneinander getrennt und demzufolge auch entsorgt werden können. Es versteht sich dabei, dass es bei dieser Ausführungsform mit einem die Kunststoffschaumauskleidung umgebenden Kunststoffprofil nicht auf eine besondere Formstabilität der Kunststoffschaum-Auskleidung ankommt.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: Einen Schnitt durch den unteren Blendrahmen eines erfindungsgemäßen Holz-Alu-Fensters ,
- Fig. 2: einen der Fig. 1 entsprechenden Schnitt durch eine abgewandelte Ausführungsform mit stärkerer Überdeckung der Innenfläche der Kunststoffschaum-Auskleidung durch die Abdeckschenkel der Befestigungsschienen und
- Fig. 3: einen den Figuren 1 und 2 entsprechenden Schnitt durch eine bevorzugte Ausführungsform eines erfindungsgemäßen Holz-Alu-Fensters, bei dem die Kunststoffschaum-Auskleidung vollständig von einem dünnen Kunststoffprofil umhüllt ist.

Bei den drei Ausführungsformen erkennt man jeweils bei 1 den Blendrahmen und bei 2 den Flügelrahmen, mit der darin in herkömmlicher Weise gehalterten Doppelverglasung 3.

In allen drei Fällen sind die Aluminiumschalen 4 und 5 zur Verkleidung des Blendrahmens 1 beziehungsweise des Flügelrahmens 2 als einfache Schalen ohne nach hinten ragende Versteifungs- oder Befestigungsstege ausgebildet. Der gesamte rückwärtige Raum der Schalen 4 und 5 ist mit einer Kunststoffschaum-Auskleidung 13, 14, vorzugsweise aus PU-Schaum versehen, wobei in die Kunststoffschaum-Auskleidung 13, 14 vorzugsweise aus Kunststoff bestehende C-förmige Befestigungsschienen 19, 20 eingebettet sind, die durch T-förmige Halter 11' gehaltert sind. Man hat also das gleiche Befestigungsprinzip wie bei den Holz-Alu-Fenstern nach dem zweiten Ausführungsbeispiel des eingangs diskutierten Standes der Technik aber ohne die dort bestehenden Kältebrücken über die rückwärtigen Versteifungs- und Halterungsrippen.

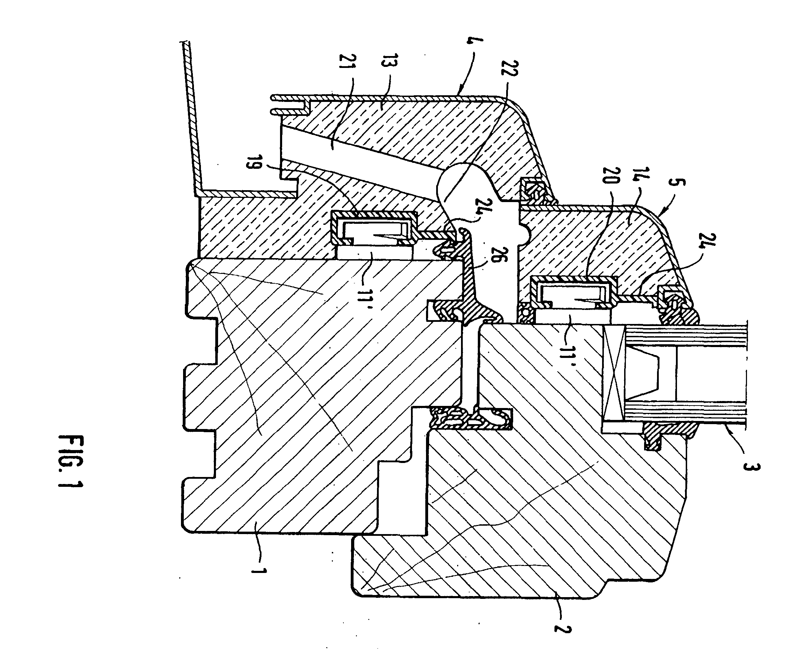

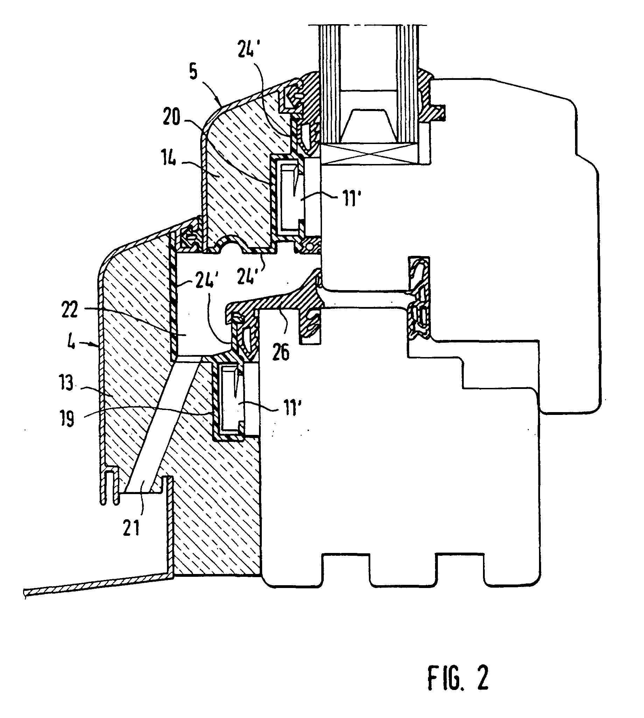

Erfindungsgemäß sind die C-förmigen Befestigungsschienen 19, 20 mit daran angeformten Abdeckschenkeln 24 und 24' (Fig. 1 und 2) zu versehen, die teilweise die Innenfläche der Kunststoffschaum-Auskleidung 13, 14 überdecken.

Während beim Ausführungsbeispiel nach Fig. 1 die in die Kunststoffschaum-Auskleidung 13 eingearbeitete Wassersammelkammer 22 freiliegt und damit leicht verschmutzen kann oder auch beschädigt werden kann, ist bei der Ausführungsform nach Fig. 2 durch die größere Ausbildung der Abdeckschenkel 24' diese Wassersammelkammer 22 vollständig ausgekleidet. Der relativ weiche raue Kunststoffschaum kann also hier weder verschmutzen noch kann er beschädigt werden.

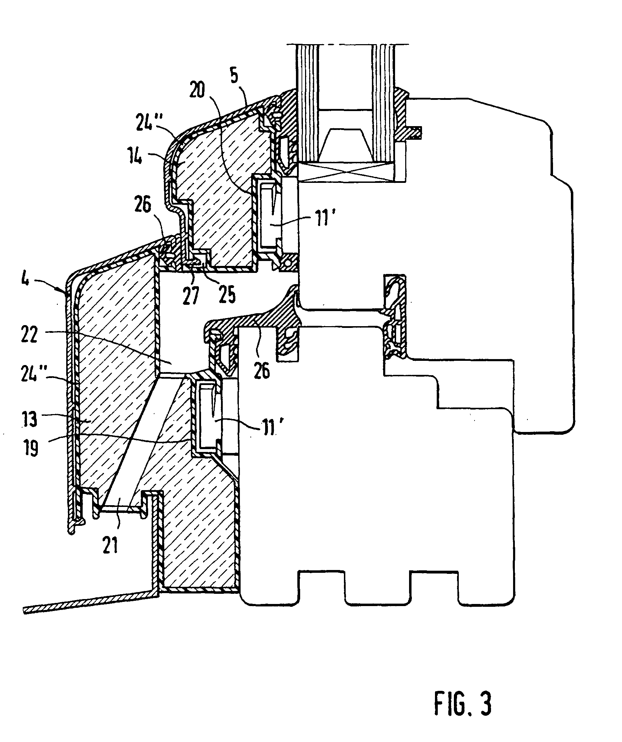

Beim Ausführungsbeispiel nach Fig. 3 ist die Ausbildung so getroffen, dass anstelle nur mehr oder weniger langer an den Kunststoffbefestigungsschienen 19, 20 angeformten Abdeckschenkeln die Abdeckschenkel mit den Befestigungsschienen ein die gesamte Kunststoffschaum-Auskleidung 13, 14 umhüllendes dünnes Kunststoffprofil 24" bilden, welches jeweils die Aluminiumschalen 4, 5 im Wesentlichen vollständig ausfüllend als separat vorgefertigtes Bauteil ausgebildet und verrastend in die Aluminiumschalen 4 und 5 eingesetzt ist. Man erkennt dabei insbesondere auch die besondere Ausbildung der unteren, im Wesentlichen C-förmigen Aufnahme 25 für den Schenkel 27 der Aluminiumschale 5 derart, dass die Aluminiumschale 5 überhaupt nicht mehr in den Innenraum mit der Wassersammelkammer 2 hineinragt, sondern vollständig entweder durch das dünne Kunststoffprofil 24" oder die Dichtleiste 26 abgedeckt und damit isoliert ist.

Der Abdeckschenkel 24 in Fig. 1, der innere hochstehende Schenkel 24' der Befestigungsschiene 19 in Fig. 2 und der entsprechende Schenkel bei der vollständigen Umkleidung der Kunststoffschaum-Auskleidung 13 in Fig. 3 bilden jeweils Anlageschenkel für die Dichtung 26.

Allen drei Ausführungsformen ist gemeinsam, dass die Wassersammelkammer 22, die als Längsrinne ausgebildet ist, mit einer Mehrzahl von beabstandeten Wasserablaufbohrungen 21 versehen ist.

## Patentansprüche

1. Holz-Alu-Fenster mit einer außen auf eine Holzrahmen (1, 2) aufgebrachten Aluminiumschale (4, 5), **dadurch gekennzeichnet, dass** die ohne rückwärts überstehende Versteifung- und Befestigungsstege ausgebildete Aluminiumschale mit einem formstabilen Kunststoffschaum, vorzugsweise PU-Schaum, ausgeschäumt ist, dessen Innenfläche an der Holzrahmenaußenfläche anliegend befestigt ist, dass in die Kunststoffschaum-Auskleidung (13, 14) Befestigungsschienen (19, 20) zur Aufnahme von vorzugsweise T-förmigen am Holzrahmen befestigten Haltern (11') eingebettet sind, dass die vorzugsweise aus Kunststoff bestehenden Befestigungsschienen (19, 20) ein C-Profil aufweisen und dass an die Befestigungsschienen (19, 20) zumindest teilweise die Innenfläche der Kunststoffschaum-Auskleidung (13, 14) überdeckende Abdeckschenkel (24, 24', 24") angeformt sind.

2. Holz-Alu-Fenster nach Anspruch 1, **dadurch gekennzeichnet, dass** die Abdeckschenkel (24', 24") sich ― unter Auskleidung der Wassersammelkammer (22) ― bis zum Dichtungsaufnahmebereich erstrecken.

3. Holz-Alu-Fenster mit einer außen auf einen Holzrahmen (1, 2) aufgebrachten Aluminiumschale (4, 5), **dadurch gekennzeichnet, dass** in die ohne rückwärts überstehende Versteifungs- und Befestigungsstege ausgebildete Aluminiumschale (4, 5) ein separat gefertigtes formstabiles Bauteil, bestehend aus einer Kunststoffschaum-Auskleidung (13, 14), insbesondere aus PU-Schaum, die vollständig von einem dünnen Kunststoffprofil (24') umhüllt ist, verrastend eingesetzt ist, dessen Innenfläche an der Holzrahmenaußenfläche anliegend befestigt ist, wobei das dünne Kunststoffprofil (24') C-förmige, in das Bauteil eingebettete Befestigungsschienen (19, 20) zur Aufnahme von T-förmigen, am Holzrahmen (1, 2) befestigten Haltern (11') bildet.

4. Holz-Alu-Fenster nach einem der Ansprüche 1 bis 3, **dadurch gekennzeichnet, dass** in der Kunststoffschaum-Auskleidung (13, 14) eine Wassersammelkammer (22) ausgebildet ist, von der die Kunststoffschaum-Auskleidung (13, 14) durchsetzende Ablaufbohrungen (21) ausgehen.

## Claims

1. Compound wood-aluminium window having an aluminium shell (4, 5 mounted on the exterior of a wooden frame (1, 2), **characterised in that** the aluminium shell formed without rearward-projecting reinforcement and fixing webs is filled with a rigid plastics foam, preferably polyurethane foam, whose inner face is fixed flush to the wooden frame outer face, **in that** fixing rails (19, 20) are embedded in the plastics foam lining in order to receive preferably T-shaped mounts (11') fixed to the wooden frame, **in that** the fixing rails (19,20) preferably consisting of plastics material have a C-shaped profile, and **in that** covering flanges (24, 24', 24") overlapping the inner face of the plastics foam lining (13, 14) at least in part are moulded to the fixing rails (19, 20).

2. Compound wood-aluminium window according to claim 1, **characterised in that** the covering flanges (24' 24") extend as far as the seal receiving region, whilst lining the water-collecting chamber (22)..

3. Compound wood-aluminium window having an aluminium shell (4, 5) mounted on a wooden frame (1, 2), **characterised in that** a separately manufactured rigid component consisting of a plastics foam lining (13, 14), in particular from polyurethane foam, which is fully enclosed by a thin plastics profile (24') and whose inner face is fixed flush to the wooden frame outer face, is inserted so as to locate in the aluminium shell (4, 5) formed without rearward-projecting reinforcement and fixing webs, the thin plastics profile (24') forming rails (19, 20) embedded in the component and contrived to receive T-shaped mounts (11') fixed to the wooden frame (1, 2).

4. Compound wood-aluminium window according to one of claims 1 to 3, **characterised in that** a water-collecting chamber (22), from which drainage bores (21) lead out by penetrating the plastics foam, is formed in the plastics lining (13, 14).

## Revendications

1. Fenêtre en bois-aluminium du type comportant une coque en aluminium (4, 5) appliquée sur un encadrement en bois (1, 2) **caractérisée en ce que** la coque en aluminium constituée sans entretoises de rigidification et de fixation dépassant vers l'arrière est réalisée par extrusion de mousse au moyen d'une mousse de matière plastique de forme stable, de préférence en mousse de polyuréthane dont la face interne est fixée contre la face externe de l'encadrement en bois, **en ce que**, dans le chemisage extérieur en mousse de matière plastique (13, 14) sont noyés des rails de fixation (19, 20) destinés à recevoir des appuis (11') de préférence en forme de T fixés à l'encadrement en bois, **en ce que** les rails de fixation (9, 20) réalisés de préférence en matière plastique présentent un profil en C, et **en ce que** sur les rails de fixation (19, 20) est conformée au moins en partie la surface intérieure de bras de protection (24, 24', 24") recouvrant le chemisage en matière plastique (13, 14).

2. Fenêtre en bois-aluminium selon la revendication 1, **caractérisée en ce que** les bras de protection (24', 24") s'étendent-au-dessous de la chambre de collecte d'eau (22)- jusqu'à la région de réception de l'étanchéisation.

3. Fenêtre en bois-aluminium du type comportant une coque en aluminium (4, 5) appliquée sur un encadrement en bois, **caractérisée en ce que**, dans la coque en aluminium (4, 5) sans entretoises de rigidification et de fixation dépassant vers l'arrière est inséré de façon à déterminer son immobilisation un élément de construction de forme stable, réalisé séparément et constituant un chemisage en mousse de matière plastique (13, 14) en particulier en mousse de polyuréthane qui est complètement enveloppé par un profilé mince en matière plastique (24) et dont la face intérieure est fixée sur la face extérieure de l'encadrement en bois, le profilé mince en matière plastique (24') formant les rails de fixation (19, 20) en forme de C noyés dans l'élément de construction en vue de recevoir des appuis en forme de T fixés à l'encadrement en bois (1, 2).

4. Fenêtre en bois-aluminium selon l'une quelconque des revendications 1 à 3, **caractérisée en ce que** dans le chemisage en mousse de matière plastique (13, 14) est créée une chambre de collecte d'eau de laquelle partent les perforations d'évacuation (21) traversant le chemisage en mousse de matière plastique (13, 14).
